# EUROPÄISCHE PATENTANMELDUNG

(11) **EP 4 283 270 A1**
(43) Veröffentlichungstag der Anmeldung: **29.11.2023**
(21) Anmeldenummer: 23164221.6
(22) Anmeldetag: 27.03.2023
(51) Int. Cl.: G01K 7/02

(54) **THERMOELEMENT**

(30) Priorität: 23.05.2022 DE 102022205124
(71) Anmelder: ContiTech AG, 30165 Hannover (DE)
(72) Erfinder: Reck, Siegfried, 30165 Hannover (DE); Barho, Erhard, 30165 Hannover (DE)
(74) Vertreter: Continental Corporation

(57) **Zusammenfassung**

Die vorliegende Erfindung betrifft ein Thermoelement (1) mit einer thermisch isolierenden Trägerschicht (10) mit einer ersten Seite (10a), mit einer der ersten Seiten (10a) gegenüberliegenden zweiten Seite (10b) und mit einer Mehrzahl von Durchgangsöffnungen (10c), welche die erste Seite (10a) und die zweite Seite (10b) miteinander verbinden, wobei auf der ersten Seite (10a) der Trägerschicht (10) mehrere erste elektrische Leiter (13) eines ersten metallischen Materials angeordnet sind, wobei auf der zweiten Seite (10b) der Trägerschicht (10) mehrere zweite elektrische Leiter (14) eines zweiten metallischen Materials angeordnet sind, wobei das erste metallische Material der ersten elektrischen Leiter (13) und das zweite metallische Material der zweiten elektrischen Leiter (14) aufeinander abgestimmt sind, um den Seebeck-Effekt zu bewirken, und wobei sich die ersten elektrischen Leiter (13) und die zweiten elektrischen Leiter (14) jeweils durch die Durchgangsöffnungen (10c) der Trägerschicht (10) kontaktieren und mehrfach in Reihe hintereinandergeschaltet sind.

## Beschreibung

Die vorliegende Erfindung betrifft ein Thermoelement.

Bei vielen technischen Anwendungen kann es vorteilhaft oder erforderlich sein, bestimmte Messgrößen wie beispielsweise eines Mediums wie z.B. dessen Temperatur und bzw. oder Druck erfassen zu können. Hierzu können Sensoren verwendet werden, welche die geforderte Messgröße bzw. die geforderten Messgrößen erfassen und die erfassten Sensordaten ausgeben können, um diese z.B. durch eine Auswerteeinheit verarbeiten und auswerten zu können. Auch können zusätzlich oder alternativ sonstige elektronische Bauteile und dergleichen verwendet werden, um den Funktionsumfang einer technischen Anwendung zu erhöhen.

Zum Betrieb derartiger Sensoren und sonstiger elektronischer Bauteile ist es erforderlich, diese mit elektrischer Energie zu speisen, damit die Sensoren etc. betrieben werden und ihre Aufgabe erfüllen können. Dies erfolgt bisher üblicherweise seitens einer externen Energiequelle durch eine leitungsgebundene Energieversorgung des Sensors seitens eines Stromnetzes oder durch einen elektrischen Energiespeicher, welche unmittelbar am Sensor angeordnet und mit diesem verbunden ist. Auch kann eine drahtlose Einkopplung von elektrischer Energie mittels elektromagnetischer Wellen wie z.B. mittels RFID-Technologie erfolgen.

Nachteilig bei einer leitungsgebundenen Energieversorgung des Sensors sowie sonstiger elektronischer Bauteile seitens eines Stromnetzes ist, dass die elektrische Versorgungsleitungen Kosten und Gewicht verursachen sowie Bauraum einnehmen können. Auch kann die Montage der elektrischen Versorgungsleitungen zusätzlichen Montageaufwand, d.h. Verkabelungsaufwand, erfordern.

Nachteilig kann hierbei ferner sein, dass derartige Sensoren sowie sonstige elektronische Bauteile auch bei Anwendungen eingesetzt werden können, bei denen ein Stromnetz oder auch eine andere externe Energiequelle schlecht oder gar nicht zugänglich sein kann. Dies kann bei industriellen Anwendungen z.B. die Verwendung im Bergbau und insbesondere in Minen der Fall sein. Bei Anwendungen im Automobilbereich kann insbesondere der Motorraum eines Fahrzeugs für elektrische Versorgungsleitungen schlecht zugänglich sein.

Nachteilig bei der Verwendung von lokalen elektrischen Energiespeichern wie z.B. wiederaufladbaren Akkumulatoren oder nicht-wiederaufladbaren Batterien als externe Energiequellen derartiger Sensoren sowie sonstiger elektronischer Bauteile ist, dass deren Vorrat an elektrischer Energie begrenzt ist. Diese weisen somit eine begrenzte Lebensdauer auf, welche überwacht werden sollte, um den unterbrechungsfreien Betrieb zu ermöglichen. Wird dies nicht beachtet, so kann der Sensor sowie die sonstigen elektronische Bauteile seine bzw. ihre Funktion nicht ausüben. Ist der elektrische Energiespeicher entleert, so ist dieser auszutauschen oder wieder aufzuladen, was einen zusätzlichen Aufwand für einen Benutzer bedeuten sowie zusätzliche Kosten verursachen kann.

Nachteilig bei der Verwendung von RFID-Technologie zur drahtlosen Energiespeisung eines derartigen Sensors ist, dass die Energieeinkopplung üblicherweise eine vergleichsweise geringe Sendedistanz aufweist, welche für viele Anwendungen zu gering sein kann, als dass diese Art der elektrischen Energieversorgung angewendet werden könnte. Auch ist ein entsprechender Sender außerhalb des Sensors sowie ein entsprechender Empfänger seitens des Sensors oder des sonstigen elektronischen Bauteils erforderlich, um den Energieaustausch realisieren zu können, was den Aufwand für diese Art der elektrischen Energieversorgung insbesondere hinsichtlich Kosten, Gewicht und bzw. oder Bauraum erhöhen und hierdurch unattraktiv machen kann. Ferner können die ausgesendeten elektromagnetischen Wellen auf andere Vorrichtungen störend wirken.

Es ist daher auch bekannt, Energie dort zu erzeugen bzw. zu wandeln, wo sie gebraucht wird, d.h. unmittelbar am Sensor bzw. an dem elektronischen Bauteil als Verbraucher. Hierzu können sog. Thermoelemente verwendet werden, welche als Paare elektrischer Leiter ausgebildet sind, welche aus unterschiedlichen Metallen mit unterschiedlichen Seebeck-Koeffizienten bestehen und an einem Ende miteinander verbunden sind. Die Anordnung und die metallischen Materialien sind so zu wählen, dass aufgrund des thermoelektrischen Effektes, auch Seebeck-Effekt genannt, zur Erfassung von Temperaturen bzw. Temperaturdifferenzen geeignet sind. Auf diese Art und Weise kann aus einer Temperaturdifferenz bzw. Wärmedifferenz entlang des elektrischen Leiters mit den beiden unterschiedlichen Metallen elektrische Energie gewonnen werden.

Nachteilig hierbei ist jedoch, dass die an den beiden anderen Enden der metallischen Leiter auftretende elektrische Spannung vergleichsweise gering ist und üblicherweise im Bereich von einigen 10 µV pro 1 °C Temperaturdifferenz liegt. Dabei kann zwar die resultierende Ausgangsspannung eines Thermoelements durch mehrere in Reihe geschaltete Leiterpaare erhöht werden. Dies erhöht jedoch den erforderlichen Bauraum, die Kosten der Herstellung sowie das Gewicht.

Eine Aufgabe der vorliegenden Erfindung ist es, ein Thermoelement der eingangs beschriebenen Art bereit zu stellen, so dass dessen Spannungserzeugung bei möglichst geringem Bauraum und bzw. oder bei möglichst geringen Kosten und bzw. oder bei möglichst geringem Gewicht erhöht werden kann. Zusätzlich oder alternativ sollen die Einsatzmöglichkeiten erhöht werden. Zumindest soll eine Alternative zu bekannten Thermoelementen geschaffen werden.

Die Aufgabe wird erfindungsgemäß durch ein Thermoelement mit den Merkmalen gemäß Patentanspruch 1 gelöst. Vorteilhafte Weiterbildungen sind in den Unteransprüchen beschrieben.

Somit betrifft die vorliegende Erfindung ein Thermoelement mit einer thermisch isolierenden Trägerschicht mit einer ersten Seite, mit einer der ersten Seiten gegenüberliegenden zweiten Seite und mit einer Mehrzahl von Durchgangsöffnungen, welche die erste Seite und die zweite Seite miteinander verbinden.

Als Material der thermisch isolierenden Trägerschicht kann jedes Material verwendet werden, welches dafür geeignet, sich zu Filmen oder Folien oder Platten verarbeiten zu lassen. Insbesondere können dies Materialien sein, welche sowohl eine gute elektrische als auch thermische Isolationswirkung besitzen. Das zeigt sich in einer niedrigen Dielektrizitätskonstante und in einem niedrigen Wärmeleitkoeffizienten. Prinzipiell kommen dafür eine Vielzahl von Materialien wie polymere Kunststoffe, aber auch Schäume in Frage. Typische derartige Kunststoffe können insbesondere PVC, Polyimid, Polyamid und Polyethylen sein, vorzugsweise gefüllt, um die Wärmeleitfähigkeit zu erhöhen. Diese können möglichst dünn, ggfs. gedruckt und bzw. oder oberflächenstrukturiert ausgebildet sein.

Vorzugsweise ist die Trägerschicht gleichzeitig flexibel, d.h. aus einem flexiblen Material, ausgebildet, wie weiter unten näher beschrieben werden wird, um gleichzeitig flexible als auch thermisch isolierende Materialeigenschaften zu erhalten. In jedem Fall kann die Trägerschicht seitens ihres Materials vorzugsweise abschnittweise oder vollständig elektrisch isolierend ausgebildet.

Auf der ersten Seite der Trägerschicht sind mehrere erste elektrische Leiter eines ersten metallischen Materials angeordnet, wobei auf der zweiten Seite der Trägerschicht mehrere zweite elektrische Leiter eines zweiten metallischen Materials angeordnet sind, wobei das erste metallische Material der ersten elektrischen Leiter und das zweite metallische Material der zweiten elektrischen Leiter aufeinander abgestimmt sind, um den Seebeck-Effekt zu bewirken. Dies kann durch die, möglichst deutlich unterschiedlichen, Seebeck-Koeffizienten der beiden elektrischen Leiter erfolgen. Hierdurch können pro Übergang bzw. pro Kontakt zwischen den Enden der beiden elektrischen Leiter einzelne thermoelektrische Leiterpaare geschaffen werden.

Die ersten elektrischen Leiter und die zweiten elektrischen Leiter kontaktieren sich jeweils durch die Durchgangsöffnungen der Trägerschicht, so dass durch die thermische Isolierung der dazwischenliegenden Trägerschicht die Temperaturdifferenz erreicht bzw. vergrößert werden kann, um pro thermoelektrischem Leiterpaar überhaupt bzw. möglichst deutlich den Seebeck-Effekt zu erreichen und die Temperaturdifferenz zwischen den beiden Seiten in elektrische Spannung zu wandeln.

Die ersten elektrischen Leiter und die zweiten elektrischen Leiter sind ferner mehrfach in Reihe hintereinandergeschaltet, um die resultierende Gesamtspannung des Thermoelements durch Addition der einzelnen thermoelektrisch erzeugten Spannungen der thermoelektrischen Leiterpaare zu vergrößern bzw. zu erhöhen.

Dabei kann durch die mehrfache Durchkontaktierung der thermoelektrischen Leiterpaare zwischen den beiden Seiten der Trägerschicht auf kleinem Raum und bzw. oder bei geringem Gewicht und bzw. oder bei geringen Kosten vergleichsweise viel elektrische Spannung thermoelektrisch erzeugt werden, da vergleichsweise viele thermoelektrischen Leiterpaare dort ausgebildet werden können. Dies kann auch die elektrische Versorgung von Sensoren oder anderen elektronischen Bauelementen ermöglichen, welche einen entsprechend hohen Bedarf an elektrischer Spannung haben, ohne dass hierfür eine drahtgebundene oder akkugespeiste elektrische Energieversorgung vorgesehen werden muss.

Gemäß einem Aspekt der Erfindung weisen die ersten elektrischen Leiter parallel zur ersten Seite der Trägerschicht verlaufenden Leiterbahnen und senkrecht zur ersten Seite der Trägerschicht durch die Durchgangsöffnungen abschnittsweise, vorzugsweise vollständig, verlaufende Durchkontaktierungen auf. Dies kann eine konkrete Möglichkeit der Umsetzung darstellen. Insbesondere können die Leiterbahnen den Aufbau bzw. die Höhe senkrecht zur Ebene der Trägerschicht gering bzw. flach halten. Auch können die Durchkontaktierungen die elektrische Leitfähigkeit sicherstellen. Dabei die Durchkontaktierungen mittels eines Leiters vollständig umzusetzen kann dies sicherstellen und einen elektrischen Kontakt mit dem anderen Leiter außerhalb bzw. oberhalb der Durchkontaktierungen ermöglichen.

Gemäß einem weiteren Aspekt der Erfindung weisen die zweiten elektrischen Leiter parallel zur zweiten Seite der Trägerschicht verlaufenden Leiterbahnen und senkrecht zur zweiten Seite der Trägerschicht durch die Durchgangsöffnungen abschnittsweise, vorzugsweise vollständig, verlaufende Durchkontaktierungen auf. Dies kann eine konkrete Möglichkeit der Umsetzung darstellen. Auch können die zuvor beschriebenen Aspekt der ersten elektrischen Leiter auf diese Art und Weise bei den zweiten elektrischen Leitern umgesetzt und genutzt werden.

Gemäß einem weiteren Aspekt der Erfindung durchdringen die Durchkontaktierungen der ersten elektrischen Leiter und die Durchkontaktierungen der zweiten elektrischen Leiter abwechselnd die Durchgangsöffnungen der Trägerschicht vollständig und die Durchkontaktierungen des einen elektrischen Leiters berühren die Leiterbahnen des anderen elektrischen Leiters elektrisch leitfähig. Dies kann eine konkrete Möglichkeit der Umsetzung darstellen. Insbesondere können hierdurch die beiden elektrischen Leiter bzw. die thermoelektrischen Leiterpaare abwechselnd und gleich umgesetzt werden, um jeweils die gleiche thermoelektrische Spannung zu erzeugen.

Gemäß einem weiteren Aspekt der Erfindung weist das Thermoelement ferner eine erste Deckschicht mit einer Innenseite, welche der ersten Seite der Trägerschicht zugewandt ist, und mit einer Außenseite auf, welche der ersten Seite der Trägerschicht abgewandt ist. Hierdurch kann ein Schutz vor äußeren Einflüssen wie insbesondere Feuchtigkeit, elektrischer Kontaktierung, physischer Berührung der Leiterbahnen der ersten elektrischen Leiter und dergleichen erfolgen. Auch können hierdurch die Leiterbahnen der ersten elektrischen Leiter innenliegend auf der Deckschicht angeordnet werden, was die Umsetzung vereinfachen kann. Auch die erste Deckschicht kann seitens ihres Materials elektrisch isolierend und vorzugsweise flexibel ausgebildet sein.

Gemäß einem weiteren Aspekt der Erfindung sind die ersten elektrischen Leiter teilweise auf der Innenseite der ersten Deckschicht angeordnet. Dies kann eine konkrete Möglichkeit der Umsetzung darstellen. Dies kann insbesondere für die Leiterbahnen der ersten elektrischen Leiter gelten, wie zuvor bereits erwähnt.

Gemäß einem weiteren Aspekt der Erfindung sind die Leiterbahnen der ersten elektrischen Leiter auf der Innenseite der ersten Deckschicht angeordnet, wobei die Durchkontaktierungen der ersten elektrischen Leiter in Durchgangsöffnungen der Trägerschicht angeordnet sind und wobei die Leiterbahnen der ersten elektrischen Leiter und die Durchkontaktierungen der ersten elektrischen Leiter einander elektrisch leitfähig berühren. Dies kann eine konkrete Möglichkeit der Umsetzung darstellen, wie zuvor bereits erwähnt.

Gemäß einem weiteren Aspekt der Erfindung weist das Thermoelement ferner eine zweite Deckschicht mit einer Innenseite, welche der zweiten Seite der Trägerschicht zugewandt ist, und mit einer Außenseite auf, welche der zweiten Seite der Trägerschicht abgewandt ist. Dies kann eine konkrete Möglichkeit der Umsetzung darstellen. Auch können die zuvor beschriebenen Aspekt der ersten elektrischen Leiter auf diese Art und Weise bei den zweiten elektrischen Leitern umgesetzt und genutzt werden. Auch die zweite Deckschicht kann seitens ihres Materials elektrisch isolierend und vorzugsweise flexibel ausgebildet sein.

Gemäß einem weiteren Aspekt der Erfindung sind die zweiten elektrischen Leiter teilweise auf der Innenseite der zweiten Deckschicht angeordnet. Dies kann eine konkrete Möglichkeit der Umsetzung darstellen. Auch können die zuvor beschriebenen Aspekt der ersten elektrischen Leiter auf diese Art und Weise bei den zweiten elektrischen Leitern umgesetzt und genutzt werden.

Gemäß einem weiteren Aspekt der Erfindung sind die Leiterbahnen der zweiten elektrischen Leiter auf der Innenseite der zweiten Deckschicht angeordnet, wobei die Durchkontaktierungen der zweiten elektrischen Leiter in Durchgangsöffnungen der Trägerschicht angeordnet sind und wobei die Leiterbahnen der zweiten elektrischen Leiter und die Durchkontaktierungen der zweiten elektrischen Leiter einander elektrisch leitfähig berühren. Dies kann eine konkrete Möglichkeit der Umsetzung darstellen. Auch können die zuvor beschriebenen Aspekt der ersten elektrischen Leiter auf diese Art und Weise bei den zweiten elektrischen Leitern umgesetzt und genutzt werden.

Gemäß einem weiteren Aspekt der Erfindung sind die Leiterbahnen der ersten elektrischen Leiter und bzw. oder die Leiterbahnen der zweiten elektrischen Leiter als Tinte mit elektrisch leitfähigen Partikeln ausgeführt. Dies kann eine konkrete Möglichkeit der Umsetzung darstellen. Insbesondere kann dies eine besonders platzsparende Umsetzung ermöglichen. In Kombination mit einem flexiblen Material der Trägerschicht, vorzugsweise und der ersten Deckschicht und bzw. oder der zweiten Deckschicht, kann dies der Flexibilität der Trägerschicht, und vorzugsweise der Deckschicht bzw. Deckschichten, Rechnung tragen, um entsprechend flexible Leiterbahnen zu erhalten.

Gemäß einem weiteren Aspekt der Erfindung ist die Trägerschicht, vorzugsweise und die erste Deckschicht und bzw. oder die zweite Deckschicht, aus einem flexiblen Material ausgebildet. Dies kann eine konkrete Möglichkeit der Umsetzung darstellen. Dies kann die Anwendungsmöglichkeiten des erfindungsgemäßen Thermoelements erhöhen.

Mit anderen Worten liegt der vorliegenden Erfindung die Erkenntnis zugrunde, dass in Folge der technologischen Entwicklungen der Energiebedarf elektronischer Systeme sinkt, so dass sie in vielen Fällen mit Energie arbeiten können, die sie aus ihrer unmittelbaren Umgebung gewinnen. Basierend auf dem Thermo-elektrischen Effekt, kann aus einer thermischen Potenzialdifferenz elektrische Energie gewonnen werden.

Aufgrund des Seebeck-Effekts entsteht in einem Stromkreis aus zwei verschiedenen elektrischen Leitern eine elektrische Spannung, wenn zwischen den Kontaktstellen eine Temperaturdifferenz besteht. Die erzeugte Spannung ist abhängig von der Materialpaarung und von der Temperaturdifferenz. Der Seebeck-Effekt kann im Prinzip genutzt werden, um aus Wärme elektrische Energie zu gewinnen. Ein einzelnes Thermo-Element bestehend aus zwei Metallen erzeugt eine elektrische Spannungen in der Größenordnung von Mikrovolt. Um damit elektronische Systeme betreiben zu können, müssen zahlreiche Elemente in Reihe geschaltet werden, um die minimale Eingangsspannung des elektrischen Energiewandlers bereit zu stellen. Thermoelektrische Elemente, die aus verschieden dotierten Halbleitern bestehen, liefern höhere Ausgangsspannungen, jedoch zu wesentlich höheren Kosten. Beide Arten von thermo-elektrischen Wandlern lassen sich nur mit erheblichem Aufwand an gekrümmte Flächen montieren.

Der erfindungsgemäße thermo-elektrische Wandler verwendet metallische Strukturen, die auf flexible Substrate gedruckt werden. Diese Technik erlaubt es, zahlreiche Thermoelemente in wenigen Produktionsschritten herzustellen, deren resultierende Ausgangsspannung für den Betrieb handelsüblicher elektrischer Energiewandler ausreicht.

Aufgrund seiner Flexibilität erschließt sich dem erfindungsgemäßen Wandler eine hohes Anwendungspotenzial, z. B. auf den Oberflächen von Behältern oder Rohren. Außerdem lässt er sich direkt als Sensorisches Element verwenden, z. B. zur Messung von Temperaturen oder Wärmeflüssen.

Ein Ausführungsbeispiel und weitere Vorteile der Erfindung werden nachstehend im Zusammenhang mit den folgenden Figuren erläutert. Darin zeigt:
- Fig. 1: eine schematische Darstellung eines Querschnitts A-A durch ein erfindungsgemäße Thermoelement; und
- Fig. 2: eine schematische Darstellung eines Horizontalschnitts B-B durch das erfindungsgemäße Thermoelement.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

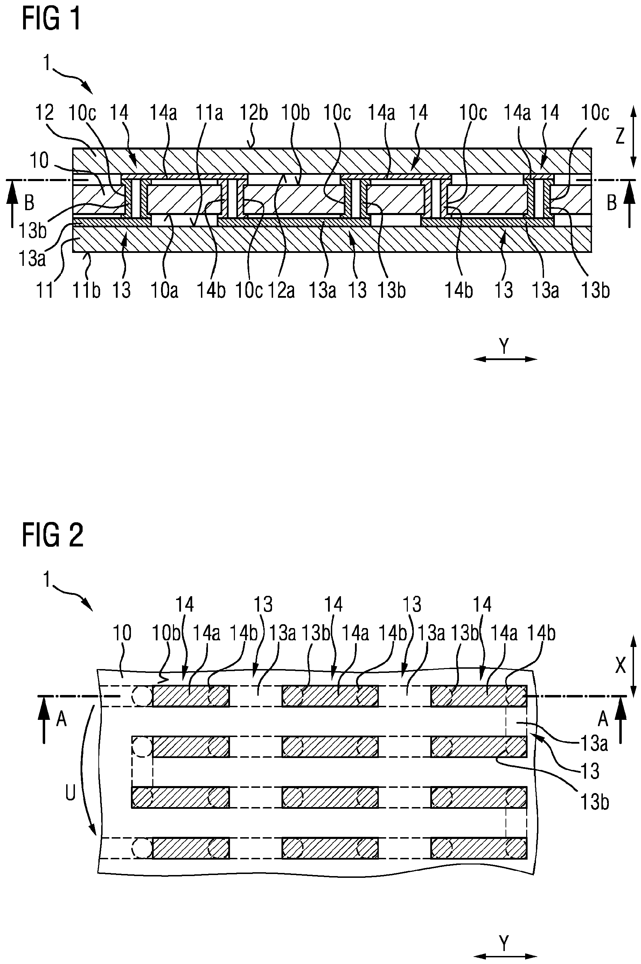

Fig. 1 zeigt eine schematische Darstellung eines Querschnitts A-A durch ein erfindungsgemäße Thermoelement 1. Fig. 2 zeigt eine schematische Darstellung eines Horizontalschnitts B-B durch das erfindungsgemäße Thermoelement 1.

Das erfindungsgemäße Thermoelement 1 besteht aus einer thermisch isolierenden Trägerschicht 10, welche in der vertikalen Richtung Z betrachtet eine erste, nach unten zeigende Seite 10a und gegenüberliegend eine zweite, nach oben zeigende Seite 10b aufweist. Die Trägerschicht 10 bzw. dessen thermisch isolierend, elektrisch isolierend sowie flexibel ausgebildetes Material weist eine Mehrzahl von Durchgangsöffnungen 10c auf, welche in der vertikalen Richtung Z die beiden Seiten 10a, 10b miteinander verbinden, vgl. Fig. 1, und in der Horizontalen X, Y in einem regelmäßigen Raster angeordnet sind, vgl. Fig. 2. Die Durchgangsöffnungen 10c der Trägerschicht 10 werden sowohl in der Längsrichtung X als auch in der Querrichtung Y abwechselnd von Durchkontaktierungen 13b, 14b zweier unterschiedlicher metallischer Materialien vollständig durchdrungen, welche jeweils über die jeweiligen Seite 10a, 10b geringfügig in der vertikalen Richtung Z hinausragen.

Das erfindungsgemäße Thermoelement 1 besteht ferner aus einer ersten Deckschicht 11, welche mit ihrer Innenseite 11a in der vertikalen Richtung Z der ersten Seite 10a der Trägerschicht 10 zugewandt auf der Trägerschicht 10 angeordnet und hierdurch dort laminiert ist. Der Innenseite 11a der ersten Deckschicht 11 gegenüberliegend weist die erste Deckschicht 11 eine Außenseite 11b auf, welche der Umgebung des Thermoelements 1 zugewandt ist und das Thermoelement 1 nach außen hin abschließt. Dies gilt vergleichbar für eine zweite Deckschicht 12 mit einer Innenseite 12a und einer Außenseite 12b, welche in der vertikalen Richtung Z gegenüberliegend auf der Trägerschicht 10 angeordnet bzw. dort laminiert ist. Auch die beiden Deckschichten 11, 12 sind aus einem elektrisch isolierenden sowie flexiblen Material ausgebildet.

Auf der Innenseite 11a der ersten Deckschicht 11 sind mehrere in der Längsrichtung X oder in der Querrichtung Y verlaufende Leiterbahnen 13a erster elektrischer Leiter 13 als elektrisch leitfähige Tinte gedruckt aufgebracht. Die gilt ebenso für die Innenseite 12a der zweiten Deckschicht 12, welche Leiterbahnen 14a zweiter elektrischer Leiter 14 aufweisen. Die Leiterbahnen 13a der ersten elektrischen Leiter 13 weisen dasselbe metallische Material wie die einen Durchkontaktierungen 13b und die Leiterbahnen 14a der zweiten elektrischen Leiter 14 dasselbe metallische Material wie die anderen Durchkontaktierungen 14b auf. Somit weisen sowohl die Leiterbahnen 13a als auch die Durchkontaktierungen 13b der ersten elektrischen Leiter 13 dasselbe erste elektrische Material und sowohl die Leiterbahnen 14a als auch die Durchkontaktierungen 14b der zweiten elektrischen Leiter 14 dasselbe zweite elektrische Material auf.

Das erste metallische Material der ersten elektrischen Leiter 13 und das zweite metallische Material der zweiten elektrischen Leiter 14 sind hinsichtlich ihrer Seebeck-Koeffizienten aufeinander abgestimmt, um den Seebeck-Effekt zu bewirken. Hierdurch werden pro Übergang bzw. pro Kontakt zwischen den Enden der beiden elektrischen Leiter 13, 14 einzelne thermoelektrische Leiterpaare geschaffen. Hierzu können die beiden metallischen Materialien der beiden elektrischen Leiter 13, 14 möglichst unterschiedliche Seebeck-Koeffizienten aufweisen.

Die Leiterbahnen 13a der ersten elektrischen Leiter 13 erstrecken sich jeweils zwischen zwei in der Längsrichtung X oder in der Querrichtung Y unmittelbar zueinander benachbart angeordneter Durchgangsöffnungen 10c der Trägerschicht 10, so dass jede Leiterbahn 13a der ersten elektrischen Leiter 13 an einem Ende eine Durchkontaktierung 13b der ersten elektrischen Leiter 13 und an dem anderen Ende eine Durchkontaktierung 14b der zweiten elektrischen Leiter 14 elektrisch leitfähig berührt. Hierdurch können an den elektrisch leitfähigen Kontaktstellen zwischen einer Leiterbahnen 13a der ersten elektrischen Leiter 13 und einer Durchkontaktierung 14b der zweiten elektrischen Leiter 14 ein thermoelektrisches Leiterpaar geschaffen werden, an dem es aufgrund des Seebeck-Effekts zur Erzeugung einer elektrischen Spannung als Thermo-Spannung bzw. als thermoelektrische Spannung kommt. Dies gilt entsprechend für die Leiterbahnen 14a der zweiten elektrischen Leiter 14.

Da alle ersten elektrischen Leiter 13 und alle zweiten elektrischen Leiter 14 abwechselnd, d.h. räumlich alternierend, hintereinander in Reihe geschaltet sind, addieren sich die einzelnen elektrischen Spannungen der thermoelektrischen Leiterpaare zu einer resultierenden Spannung U als resultierende Thermo-Spannung U des erfindungsgemäßen Thermoelements 1 auf, welche hierdurch vergleichsweise hoch ausfallen kann. Somit kann vergleichsweise einfach, bauraum- sowie kostensparend eine vergleichsweise hohe resultierende Thermo-Spannung U mittels des Seebeck-Effekts erzeugt werden, welcher aus dem Temperaturunterschied auf den beiden Seiten der thermisch isolierenden Trägerschicht 10 resultiert. Aufgrund der flexiblen Materialeigenschaften des erfindungsgemäßen Thermoelements 1 kann diese Art der Energiegewinnung vielseitig und flexibel eingesetzt und genutzt werden.

### Bezugszeichenliste (Teil der Beschreibung)

- A-A: Querschnitt
- B-B: Horizontalschnitt
- U: resultierende (Thermo-)Spannung des Thermoelements 1

- X: Längsrichtung; Tiefe
- Y: Querrichtung; Breite
- Z: vertikale Richtung; Höhe
- X, Y: Horizontalen; horizontale Ebene

- 1: Thermoelement
- 10: thermisch isolierende Trägerschicht
- 10a: erste Seite der Trägerschicht 10
- 10b: zweite Seite der Trägerschicht 10
- 10c: Durchgangsöffnungen der Trägerschicht 10
- 11: erste Deckschicht
- 11a: Innenseite der ersten Deckschicht 11
- 11b: Außenseite der ersten Deckschicht 11
- 12: zweite Deckschicht
- 12a: Innenseite der zweiten Deckschicht 12
- 12b: Außenseite der zweiten Deckschicht 12
- 13: erster elektrischer Leiter
- 13a: Leiterbahnen der ersten elektrischen Leiter 13
- 13b: Durchkontaktierungen der ersten elektrischen Leiter 13
- 14: zweiter elektrischer Leiter
- 14a: Leiterbahnen der zweiten elektrischen Leiter 14
- 14b: Durchkontaktierungen der zweiten elektrischen Leiter 14

## Patentansprüche

1. Thermoelement (1)
mit einer thermisch isolierenden Trägerschicht (10)
mit einer ersten Seite (10a),
mit einer der ersten Seiten (10a) gegenüberliegenden zweiten Seite (10b) und
mit einer Mehrzahl von Durchgangsöffnungen (10c), welche die erste Seite (10a) und die zweite Seite (10b) miteinander verbinden,
wobei auf der ersten Seite (10a) der Trägerschicht (10) mehrere erste elektrische Leiter (13) eines ersten metallischen Materials angeordnet sind, wobei auf der zweiten Seite (10b) der Trägerschicht (10) mehrere zweite elektrische Leiter (14) eines zweiten metallischen Materials angeordnet sind, wobei das erste metallische Material der ersten elektrischen Leiter (13) und das zweite metallische Material der zweiten elektrischen Leiter (14) aufeinander abgestimmt sind, um den Seebeck-Effekt zu bewirken, und wobei sich die ersten elektrischen Leiter (13) und die zweiten elektrischen Leiter (14) jeweils durch die Durchgangsöffnungen (10c) der Trägerschicht (10) kontaktieren und mehrfach in Reihe hintereinandergeschaltet sind.

2. Thermoelement (1) nach Anspruch 1,
wobei die ersten elektrischen Leiter (13) parallel zur ersten Seite (10a) der Trägerschicht (10) verlaufenden Leiterbahnen (13a) aufweisen und
wobei die ersten elektrischen Leiter (13) senkrecht zur ersten Seite (10a) der Trägerschicht (10) durch die Durchgangsöffnungen (10c) abschnittsweise, vorzugsweise vollständig, verlaufende Durchkontaktierungen (13b) aufweisen.

3. Thermoelement (1) nach Anspruch 1 oder 2,
wobei die zweiten elektrischen Leiter (14) parallel zur zweiten Seite (10b) der Trägerschicht (10) verlaufenden Leiterbahnen (14a) aufweisen und
wobei die zweiten elektrischen Leiter (14) senkrecht zur zweiten Seite (10b) der Trägerschicht (10) durch die Durchgangsöffnungen (10c) abschnittsweise, vorzugsweise vollständig, verlaufende Durchkontaktierungen (14b) aufweisen.

4. Thermoelement (1) nach Anspruch 1 und 2,
wobei die Durchkontaktierungen (13b) der ersten elektrischen Leiter (13) und die Durchkontaktierungen (14b) der zweiten elektrischen Leiter (14) abwechselnd die Durchgangsöffnungen (10c) der Trägerschicht (10) vollständig durchdringen und
wobei die Durchkontaktierungen (13b; 14b) des einen elektrischen Leiters (13; 14) die Leiterbahnen (13a; 14a) des anderen elektrischen Leiters (13; 14) elektrisch leitfähig berühren.

5. Thermoelement (1) nach einem der vorangehenden Ansprüche,
ferner mit einer ersten Deckschicht (11)
mit einer Innenseite (11a), welche der ersten Seite (10a) der Trägerschicht (10) zugewandt ist, und
mit einer Außenseite (11b), welche der ersten Seite (10a) der Trägerschicht (10) abgewandt ist.

6. Thermoelement (1) nach Anspruch 5,
wobei die ersten elektrischen Leiter (13) teilweise auf der Innenseite (11a) der ersten Deckschicht (11) angeordnet sind.

7. Thermoelement (1) nach einem der Ansprüche 2 bis 4 und nach Anspruch 5 oder 6,
wobei die Leiterbahnen (13a) der ersten elektrischen Leiter (13) auf der Innenseite (11a) der ersten Deckschicht (11) angeordnet sind,
wobei die Durchkontaktierungen (13b) der ersten elektrischen Leiter (13) in Durchgangsöffnungen (10c) der Trägerschicht (10) angeordnet sind und
wobei die Leiterbahnen (13a) der ersten elektrischen Leiter (13) und die Durchkontaktierungen (13b) der ersten elektrischen Leiter (13) einander elektrisch leitfähig berühren.

8. Thermoelement (1) nach einem der Ansprüche 5 bis 7,
ferner mit einer zweiten Deckschicht (12)
mit einer Innenseite (12a), welche der zweiten Seite (10b) der Trägerschicht (10) zugewandt ist, und
mit einer Außenseite (12b), welche der zweiten Seite (10b) der Trägerschicht (10) abgewandt ist.

9. Thermoelement (1) nach Anspruch 8,
wobei die zweiten elektrischen Leiter (14) teilweise auf der Innenseite (12a) der zweiten Deckschicht (12) angeordnet sind.

10. Thermoelement (1) nach einem der Ansprüche 2 bis 4 und nach Anspruch 8 oder 9,
wobei die Leiterbahnen (14a) der zweiten elektrischen Leiter (14) auf der Innenseite (12a) der zweiten Deckschicht (12) angeordnet sind,
wobei die Durchkontaktierungen (14b) der zweiten elektrischen Leiter (14) in Durchgangsöffnungen (10c) der Trägerschicht (10) angeordnet sind und
wobei die Leiterbahnen (14a) der zweiten elektrischen Leiter (14) und die Durchkontaktierungen (14b) der zweiten elektrischen Leiter (14) einander elektrisch leitfähig berühren.

11. Thermoelement (1) nach einem der Ansprüche 2 bis 10,
wobei die Leiterbahnen (13a) der ersten elektrischen Leiter (13) und/oder die Leiterbahnen (14a) der zweiten elektrischen Leiter (14) als Tinte mit elektrisch leitfähigen Partikeln ausgeführt sind.

12. Thermoelement (1) nach einem der vorangehenden Ansprüche,
wobei die Trägerschicht (10), vorzugsweise und die erste Deckschicht (11) und/oder die zweite Deckschicht (12), aus einem flexiblen Material ausgebildet ist.
